# EUROPÄISCHE PATENTSCHRIFT

(11) **EP 3 236 818 B1**
(45) Veröffentlichungstag und Bekanntmachung des Hinweises auf die Patenterteilung: **11.07.2018**
(21) Anmeldenummer: 16812907.0
(22) Anmeldetag: 24.11.2016
(51) Int. Cl.: A47J 31/44

(54) **GETRÄNKEZUBEREITUNGSVORRICHTUNG SOWIE BETRIEBSVERFAHREN**
BEVERAGE PREPARATION DEVICE AND METHOD OF OPERATION
DISPOSITIF DE PRÉPARATION DE BOISSONS ET PROCÉDÉ DE FONCTIONNEMENT

(30) Priorität: 17.03.2016 DE 102016104972
(43) Veröffentlichungstag der Anmeldung: 01.11.2017
(73) Patentinhaber: Eugster/Frismag AG, 8580 Amriswil (CH)
(72) Erfinder: KELLER, Marco, 9325 Roggwil (CH); SPYCHER, Daniel, 8245 Feuerthalen (CH)
(74) Vertreter: Patentanwälte Behrmann Wagner PartG mbB
(86) Internationale Anmeldenummer: PCT/EP2016/078650
(87) Internationale Veröffentlichungsnummer: WO 2017/157489

(56) Entgegenhaltungen:
- DE-A1-102013 010 110
- DE-U1- 7 915 161

## Beschreibung

Die Erfindung betrifft eine Getränkezubereitungsvorrichtung, insbesondere eine Kaffeemaschine, gemäß dem Oberbegriff des Anspruchs 1 mit einem Gehäuse und mit einem Auslass zum Auslassen eines (mittels der Getränkezubereitungsvorrichtung hergestellten) Getränks in ein Trinkbehältnis sowie mit einer, auf einer Gehäusefrontseite mit einem Einsteckabschnitt in unterschiedlich zu dem Auslauf, insbesondere in einer Hochrichtung, beabstandeten Einstecköffnungen abstandsvariabel relativ zu dem Auslass lösbar anordnenbaren Abstelleinrichtung zum Abstellen des Trinkbehältnisses unterhalb des Auslasses auf einem Abstellabschnitt der Abstelleinrichtung.

Es sind Getränkezubereitungsvorrichtungen bekanntgeworden, bei denen der Auslauf relativ zu einer ortsfest angeordneten Abstelleinrichtung für ein Trinkgefäß stufenlos verstellbar ist. Eine solche Verstelleinrichtung lässt sich aus Kosten- und/oder Platzgründen nicht an allen Getränkezubereitungsvorrichtungen realisieren.

Daneben sind beispielsweise in der EP 1 818 881 B1 beschriebene Verstellmechanismen bekannt, bei denen eine Abstelleinrichtung motorisch relativ zu einem Auslauf verstellbar ist.

Neben den vorgenannten, technisch relativ aufwendigen Prinzipien zur abstandsvariablen Anordnung einer Abstelleinrichtung für (unterschiedlich große) Trinkgefässe relativ zu einem Auslauf sind Prinzipien bekanntgeworden, bei denen die Abstelleinrichtung in entlang einer Hochrichtung der Getränkezubereitungsvorrichtung übereinander angeordnete Einstecköffnungen in der Gehäusefrontseite einsteckbar ist, wodurch eine gestufte Abstandsvariation zum Auslauf auf konstruktiv einfache und kostengünstige Weise umsetzbar ist. Ein solches Verstellprinzip ist beispielsweise in der DE 79 15 161 U1 oder der CH 706 781 A2 beschrieben. Bei der bekannten Kaffeemaschine ist eine Abstelleinrichtung in unterschiedlichen Höhenpositionen relativ zu einem Auslass fixierbar, wobei zum Fixieren der Abstelleinrichtung in einer Hochrichtung der Kaffeemaschine übereinander angeordnete, schlitzförmige Einstecköffnungen vorgesehen sind. Bei der bekannten Getränkezubereitungsvorrichtung kann die Abstelleinrichtung zudem noch in um 180° zueinander verdrehten Positionen in der jeweiligen Einstecköffnung festgelegt werden, um somit eine noch größere Abstandsvariabilität zu erzielen.

Aus der DE 93 03 003 A1 ist es bekanntgeworden, eine Abstellplatte für eine Kaffeekanne in unterschiedlichen, in einer Gehäusefrontseite übereinander angeordneten Einstecköffnungen zu fixieren, um die Abstellplatte und damit die Kaffeekanne abstandsvariabel zu einem Kaffeefilter anzuordnen.

Zum weiteren Stand der Technik werden die DE 10 2008 042 177 A1, die DE 10 2008 042 178 A1, die EP 2 462 849 A1, die DE 91 09 023 U1, die EP 2 131 705 B1, die DE 601 04 300 T2, die WO 2011/154492 A1 und die WO 2012/007313 A1 genannt.

Die Getränkezubereitungsvorrichtungen mit frontseitigen Einstecköffnungen zum lösbaren Einstecken einer Abstelleinrichtung haben sich bewährt. Es wird jedoch als nachteilig empfunden, dass die nicht genutzten bzw. über einen längeren Zeitraum nicht mit einer Abstelleinrichtung belegten Einstecköffnungen zu Verschmutzungen neigen.

Die EP 2 721 974 A1 betrifft einen Kaffeevollautomaten mit feststehender, d.h. nicht höhenverstellbarer Abstelleinrichtung für Tassen. Der bekannte Kaffeevollautomat umfasst eine als Tür ausgebildete Seitenwand, über die eine im Inneren des Gehäuses angeordnete Brüheinheit zu Wartungs- und/oder Reinigungszwecken zugänglich ist. Bodenseitig umfasst der bekannte Vollautomat seitlich eine verschließbare Griffmulde zum Transportieren der Vorrichtung.

Ausgehend von dem vorgenannten Stand der Technik liegt der Erfindung daher die Aufgabe zugrunde, eine gattungsgemäße, mehrere auf einer Gehäusefrontseite angeordnete, zur alternativen Aufnahme einer Abstelleinrichtung dienende Einstecköffnungen aufweisende Getränkezubereitungsvorrichtung hinsichtlich der Reinigbarkeit und/oder einer geringeren inneren Verschmutzungsneigung zu verbessern. Ferner besteht die Aufgabe darin, ein geeignetes Betriebsverfahren eine derartig verbesserte Getränkezubereitungsvorrichtung anzugeben.

Diese Aufgabe wird hinsichtlich der Getränkezubereitungsvorrichtung mit den Merkmalen des Anspruchs 1 gelöst, d.h. bei einer gattungsgemäßen Getränkezubereitungsvorrichtung dadurch, dass den Einstecköffnungen Verschlussmittel (Blendenmittel bzw. Verschlussblende) zum Verschließen, d.h. zum Verblenden) der Einstecköffnungen bei nicht eingesteckter Abstelleinrichtung zugeordnet sind.

Hinsichtlich des Verfahrens wird die Aufgabe mit den Merkmalen des Anspruchs 12 gelöst, d.h. bei einem gattungsgemäßen Verfahren dadurch, dass die Abstelleinrichtung aus einer der Einstecköffnungen entnommen und diese Einstecköffnung, bevorzugt selbsttätig, mittels der Verschlussmittel verschlossen und die Abstelleinrichtung während oder nach dem Verschließen der Einstecköffnung in einer der Einstecköffnungen, bevorzugt einer anderen der Einstecköffnungen, lösbar angeordnet wird.

Vorteilhafte Weiterbildungen der Erfindung sind in den Unteransprüchen angegeben. In den Rahmen der Erfindung fallen sämtliche Kombinationen aus zumindest zwei von in der Beschreibung, den Ansprüchen und/oder den Figuren offenbarten Merkmalen.

Zur Vermeidung von Wiederholungen sollen vorrichtungsgemäß offenbarte Merkmale auch als verfahrensgemäß offenbart gelten und beanspruchbar sein. Ebenso sollen verfahrensgemäß offenbarte Merkmale auch als vorrichtungsgemäß offenbart gelten und beanspruchbar sein.

Der Erfindung liegt der Gedanke zugrunde, bei einer Getränkezubereitungsvorrichtung, bei der eine Abstelleinrichtung in unterschiedlichen definierten Höhenpositionen (Abständen) relativ zu einem, bevorzugt nicht höhenverstellbaren Auslauf anordnenbar ist, indem die Abstelleinrichtung mit einem Einsteckabschnitt in einer ersten und mindestens einer zweiten, unterschiedlich weit von dem Auslauf beabstandeten, bevorzugt schlitzförmigen Einstecköffnung in einer Gehäusefrontseite aufnehmbar ist, der ersten und der mindestens einen weiteren, zweiten Einstecköffnung von der Abstelleinrichtung separate, bevorzugt gehäusefeste, Verschlussmittel zuzuordnen, mit denen die jeweils nicht mit der Abstelleinrichtung belegte Einstecköffnung, wie später noch erläutert werden wird bevorzugt selbsttätig, verschließbar bzw. verblendbar ist. Anders ausgedrückt sind die, bevorzugt umfangsgeschlossenen, d.h. bevorzugt von einem vollständig um die jeweilige Einstecköffnung umlaufenden, insbesondere von dem Gehäuse gebildeten, Öffnungsrand begrenzten, Einstecköffnungen zur alternativen Aufnahme der Abstelleinrichtung für den Fall, dass in diese die Abstelleinrichtung gerade nicht eingesteckt ist, mithilfe von Verschlussmitteln der Getränkezubereitungsvorrichtung verschließbar, so dass ein Schmutzeintrag in die gehäusefrontseitige Einstecköffnung hinein sicher vermieden wird. Das erfindungsgemäße Vorsehen entsprechender Verschlussmittel im Rahmen einer Getränkezubereitungsvorrichtung, beispielsweise einer eine Injektionseinrichtung zum Einleiten von Wasser in eine Portionseinheit aufweisende Portionseinheitenmaschine, wie einer Kapselmaschine oder einem Kaffeevollautomat ergibt zudem ein ansprechendes Design, da die ästhetisch als nicht ansprechend empfundenen, offenen Einstecköffnungen von bekannten Maschinen als ästhetisch nicht ansprechend empfunden werden.

Bevorzugt umfassen die Verschlussmittel den Einstecköffnungen zugeordnete, ein- oder mehrteilige Verschlusselemente (Verschlussblenden), die jeweils zwischen einer jeweiligen, bevorzugt innerhalb des Gehäuses angeordneten, Öffnungsposition und einer jeweiligen Verschlussposition verstellbar sind, in der sie die jeweilige Einstecköffnung, bevorzugt flächenbündig mit der Gehäusefrontseite, verschließen. Anders ausgedrückt ist jeder Einstecköffnung jeweils ein Verschlusselement zugeordnet, das zwischen zwei definierten Positionen, nämlich einer Öffnungsposition und einer die jeweilige Einstecköffnung verschließenden Verschlussposition verstellbar ist. Die Verschlusselemente sind dabei bevorzugt in jeder der beiden Positionen sowie auf dem Verstellweg dazwischen mittelbar oder unmittelbar am Gehäuse der Getränkezubereitungsvorrichtung, bevorzugt in dessen Innerem, festgelegt. Besonders bevorzugt sind die Verschlusselemente dabei derart ausgebildet und angeordnet, dass ein jeweiliges Verschlusselement durch einen Einsteckvorgang der Abstelleinrichtung in die zugehörige Einstecköffnung durch Kraftbeaufschlagung mittels der Abstelleinrichtung von der Verschlussposition in Richtung der zugehörigen Öffnungsposition, bevorzugt bis in die Öffnungsposition hinein verstellbar ist bzw. verstellt wird. Auf diese Weise kann auf einen alternativ vorsehbaren, separaten Antrieb zum Öffnen einer jeweiligen Einstecköffnung verzichtet werden.

Als besonders vorteilhaft hat sich eine Ausführungsvariante herausgestellt, bei der den Verschlusselementen Antriebsmittel, bevorzugt Kraftspeichermittel zugeordnet sind, die die Verschlusselemente selbsttätig bei und/oder nach einem Herausziehen der Abstelleinrichtung aus der zugehörigen Einstecköffnung in Richtung der zugehörigen Verschlussposition, bevorzugt bis in die Verschlussposition hinein verstellen bzw. schließkraftbeaufschlagen. Durch die Zuordnung von entsprechenden Antriebsmitteln zu jedem Verschlusselement kann somit ein selbsttätiges Schließen sämtlicher Einstecköffnungen sichergestellt werden.

Im Hinblick auf die konkrete Ausbildung der Kraftspeichermittel gibt es unterschiedliche Möglichkeiten. So ist es beispielsweise denkbar, Elastomerelemente, beispielsweise aus Kunststoff einzusetzen. Zusätzlich oder alternativ ist der Einsatz klassischer, beispielsweise metallischer oder aus einem anderen Werkstoff ausgebildeter Federn möglich, beispielsweise der Einsatz von Torsionsfedern oder Blattfedern, insbesondere bei der Integration der Verschlusselemente in Klappen. Auch ist der Einsatz von klassischen Schraubendruckfedern möglich, insbesondere bei einer translatorisch verstellbaren (verschiebbaren) Anordnung der Verschlusselemente.

Als besonders zweckmäßig hat es dabei herausgestellt, wenn die Antriebsmittel derart ausgebildet sind, dass diese die Verschlusselemente auch noch nach Erreichen der Verschlussposition, d.h. in der Verschlussposition kraftbeaufschlagen, um die Verschlusselemente in der Verschlussposition zu halten, insbesondere um zu verhindern, dass durch Vibrationen während des Betriebs der Getränkezubereitungsvorrichtung ein versehentliches Öffnen vermieden wird, ohne dass eine Abstelleinrichtung in die zugehörige Einstecköffnung eingeführt wird und/oder um eine exakte Positionierung der Verschlusselemente in der jeweiligen Verschlussposition zu erreichen, was insbesondere dann von Vorteil ist, wenn die Verschlusselemente in ihrer jeweiligen Verschlussposition flächenbündig mit der Gehäusefrontseite (Frontblende) angeordnet sind, also insbesondere nicht über diese vorstehen oder zu dieser rückversetzt sind. Hierdurch kann zum einen der ästhetische Eindruck der Getränkezubereitungsvorrichtung verbessert werden und zudem die Gefahr eines etwaigen Schmutzeintrages weiter reduziert werden.

Zusätzlich oder alternativ zu der vorbeschriebenen Ausgestaltungsvariante ist es möglich, den Verschlusselementen der Verschlussmittel Sicherungsmittel, insbesondere Permanentmagnetmittel und/oder Rastmittel zuzuordnen, um die Verschlusselemente definiert kraftschlüssig zu positionieren und/oder in der jeweiligen Verschlussposition zu halten. Bevorzugt beaufschlagen die Permanentmagnetmittel und/oder die Rastmittel die Verschlusselemente mit einer jeweiligen Verschlusskraft auch noch nach Erreichen der Verschlussposition. Insbesondere das Vorsehen von Permanentmagnetmitteln ermöglicht eine Ausführungsvariante ohne die zuvor erwähnten Antriebsmittel, insbesondere in Form von Kraftspeichermitteln. So ist es beispielsweise denkbar, dass die Verschlusselemente, insbesondere bei jeweiliger Integration in eine Klappe, rein schwerkraftbedingt beim Herausziehen der Abstelleinrichtung aus der zugehörigen Einstecköffnung in Richtung der Verschlussposition verstellt werden, wobei die Permanentmagnetmittel derart ausgebildet und angeordnet sein können, dass sie die Verschlussbewegung, insbesondere auf einem letzten Wegabschnitt durch entsprechende Magnetkraftwirkung unterstützen, d.h. das Verschlusselement in die entsprechende Verschlussposition kraftbeaufschlagen und/oder in der Verschlussposition halten bzw. sichern.

Im Hinblick auf den Bewegungsablauf bzw. die Bewegungsbahn, die die Verschlusselemente zwischen ihrer jeweiligen Öffnungsposition und ihrer jeweiligen Verschlussposition zurücklegen gibt es unterschiedliche Realisierungsmöglichkeiten. So ist es beispielsweise umsetzbar, die Verschlusselemente translatorisch verstellbar zu führen oder alternativ verschwenkbar anzuordnen. Auch ist eine komponierte translatorischerotatorische Bewegung realisierbar, beispielsweise durch das Vorsehen einer entsprechenden Kulissenführung.

Bei einer verschwenkbar Anordnung der Verschlusselemente hat es sich als vorteilhaft herausgestellt, die Verschlusselemente als Bestandteil einer jeweiligen Klappe auszugestalten, wobei die Klappe je nach Fixierungsort, insbesondere Gelenkverbindungsposition, und Schwenkrichtung in ihrer Verschlussposition oberhalb oder unterhalb der Einstecköffnung oder alternativ auch seitlich davon angeordnet sein kann. Grundsätzlich ist es denkbar mehrere Klappen pro Einstecköffnung vorzusehen, die beispielsweise saloontürenartig interagieren und jeweils nur einen Teilabschnitt des freien Öffnungsquerschnitts der Einstecköffnung verschließen. Bevorzugt ist jedoch, eine einzige Klappe je Einstecköffnung vorzusehen. Grundsätzlich ist es denkbar, dass sämtliche Klappen oberhalb oder alternativ unterhalb der Einstecköffnung in ihrer jeweiligen Verschlussposition angeordnet sind. Denkbar ist es auch, ein Verschlusselement in seiner Verschlussposition oberhalb der Einstecköffnung und mindestens ein anderes Verschlusselement unterhalb der Einstecköffnung anzuordnen.

Besonders bevorzugt ist es, wenn die Einstecköffnungen, welche bevorzugt, jedoch nicht zwingend einen identischen Öffnungsquerschnitt aufweisen, in einer sich senkrecht zu einer Aufstellfläche (Grundfläche) der Getränkezubereitungsvorrichtung erstreckenden, bei einer horizontalen Ausrichtung der Aufstellfläche vertikalen, Hochrichtung übereinander angeordnet sind, wobei bevorzugt jeweils zwei benachbarte Einstecköffnungen über einen Gehäuseabschnitt voneinander beabstandet sind. Dabei ist es besonders bevorzugt, wenn die Einstecköffnungen von einem Öffnungsrand umgeben sind, der von der Gehäusefrontseite gebildet ist. Anders ausgedrückt befinden sich bzw. erstrecken sich die freien Öffnungsquerschnitte der Einstecköffnungen bevorzugt in einer sich senkrecht zur Aufstellfläche erstreckenden Ebene. Insgesamt von Vorteil ist es, wenn sich die Einstecköffnungen in das Gehäuse hineinerstrecken, so dass also eine Abstelleinrichtung abschnittsweise in das Gehäuse einsteckbar bzw. einführbar ist, um diese lösbar an dem Gehäuse anzuordnen.

Grundsätzlich ist es denkbar, die Abstelleinrichtung ausschließlich durch Einschieben eines Fixier- bzw. Einsteckabschnitts in eine Einstecköffnung in dieser festzulegen, wobei es bevorzugt ist, wenn der die Gehäusefrontseite überragende (Abstell-)Abschnitt für ein Kippmoment des überstehenden Abschnittes nach unten Sorge trägt, um die Abstelleinrichtung in einer Einstecköffnung zu verklemmen. Ganz besonders bevorzugt ist es, wenn jeder Einstecköffnung Hintergriffmittel zugeordnet sind, die, insbesondere durch ein zuvor beschriebenes Kippmoment von der Abstelleinrichtung im Innern des Gehäuses, bevorzugt bezogen auf eine Vertikale von unten nach oben hintergriffen werden können, um somit die Abstelleinrichtung gegen ein einfaches geradliniges Herausziehen zu sichern. Im Falle des Vorsehens entsprechender Hintergriffmittel muss die Abstelleinrichtung bevorzugt mit ihrem nach vorne ragenden Abschnitt in Richtung Auslauf verkippt werden, so dass die Abstelleinrichtung von den Hintergriffmitteln freikommt und dann nach vorne aus der Einstecköffnung entnommen werden kann.

Als besonders zweckmäßig hat es sich herausgestellt, wenn die Abstelleinrichtung nicht nur eine Aufstellfläche für ein (nicht zur Getränkezubereitungsvorrichtung gehöriges) Trinkbehältnis bildet, sondern gleichzeitig als Tropfschale ausgebildet ist, um nachtropfendes Getränk, überlaufendes Getränk und/oder Wasser von einem fakultativen Spülvorgang der Getränkezubereitungsvorrichtung auffangen zu können. Durch Entnehmen der Abstelleinrichtung wird somit gleichzeitig die Tropfschale von dem Gehäuse entfernt und kann entleert werden.

Als ganz besonders zweckmäßig hat es sich herausgestellt, wenn ein, zumindest einen Teil der Einstecköffnungen, vorzugsweise sämtliche Einstecköffnungen, mit zugehörigen Verschlussmitteln aufweisender Gehäusefrontseitenabschnitt Bestandteil einer Gehäuseschublade ist, mit welcher ein Trester- oder Kapselauffangbehälter der an der Gehäuseschublade ausgebildet, an dieser fixiert oder lösbar darauf angeordnet sein kann aus dem Gehäuse zwecks Entleerung und/oder Reinigung entnehmbar ist. Je nach Ausgestaltung der Getränkezubereitungsvorrichtung kann in der Gehäuseschublade unmittelbar Trester oder alternativ Kapseln oder sonstige Portionseinheiten nach einem Getränkeherstellungsprozess aufgefangen werden.

Die Erfindung führt auch auf ein Verfahren zum Betreiben einer erfindungsgemäßen Getränkezubereitungsvorrichtung, wobei erfindungsgemäß vorgesehen ist, dass nach dem Entnehmen der Abstelleinrichtung aus einer der Einstecköffnungen und dem (zumindest teilweisen) Verschließen dieser Einstecköffnung mittels der Verschlussmittel die Abstelleinrichtung in dieselbe oder alternativ in eine andere Einstecköffnung eingesteckt wird, bevorzugt unter gleichzeitigem Öffnen der Einstecköffnung, insbesondere durch Verstellen eines entsprechenden Verschlusselementes (Verschlussblende) der Verschlussmittel.

Weitere Vorteile, Merkmale und Einzelheiten der Erfindung ergeben sich aus der nachfolgenden Beschreibung bevorzugter Ausführungsbeispiele sowie anhand der Zeichnungen.

Diese zeigen in:
- Fig. 1:: eine Ansicht auf eine nach dem Konzept der Erfindung ausgebildete Getränkezubereitungsvorrichtung von schräg vorne auf eine Gehäusefrontseite,
- Fig. 2:: einen Einstecköffnungen aufweisenden Gehäusefrontseitenabschnitt in einer Ansicht von hinten bzw. von der Gehäuseinnenseite her, und
- Fig. 3:: den Gehäusefrontseitenabschnitt gemäß Fig. 2 in einer Ansicht von innen bzw. hinten in der Ausbildung als einen Auffangbehälter für Trester oder Portionseinheiten, insbesondere Kapseln aufweisenden Gehäuseschublade.

In den Figuren sind gleich Elemente und Elemente mit der gleichen Funktion mit den gleichen Bezugszeichen gekennzeichnet.

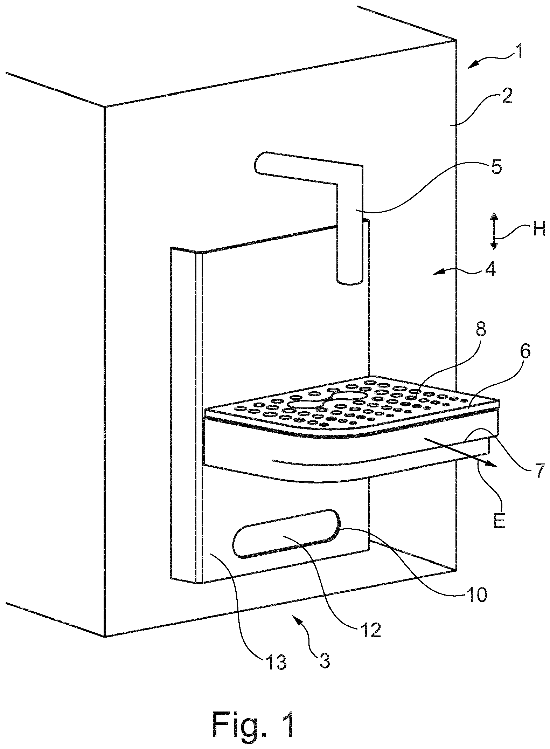

In Fig. 1 ist eine beispielhaft als Kaffeekapselmaschine ausgebildete Getränkezubereitungsvorrichtung 1 gezeigt. Diese umfasst ein Gehäuse, welches unmittelbar oder über nicht gezeigte Füße eine (untere) Aufstellfläche 3 definiert, die üblicherweise horizontal ausgerichtet wird bzw. ist. Senkrecht zu dieser Aufstellfläche 3 erstreckt sich eine Gehäusefrontseite 4 (Gehäusefrontwand) in einer sich senkrecht zur Aufstellfläche 3 erstreckenden Hochrichtung H, die üblicherweise vertikal ausgerichtet wird bzw. ist. In einem Bereich vor der Gehäusefrontseite 4 befindet sich ein Auslauf 5 für ein mittels der Getränkezubereitungsvorrichtung 1 hergestelltes Getränk, hier beispielhaft Kaffee. Das Getränk kann durch den Auslauf 5 in ein nicht gezeigtes Trinkbehältnis, beispielsweise eine Tasse, ein Glas oder einen Becherströmen, welches auf einer Abstelleinrichtung 6 in einem Bereich unterhalb des Auslaufes 5 angeordnet ist. Die Abstelleinrichtung 6 umfasst in dem gezeigten Ausführungsbeispiel eine Tropfschale 7 und ein die Tropfschale 7 überdeckendes Abtropf- bzw. Aufstellgitter 8, auf welchem das Trinkbehältnis platzierbar ist.

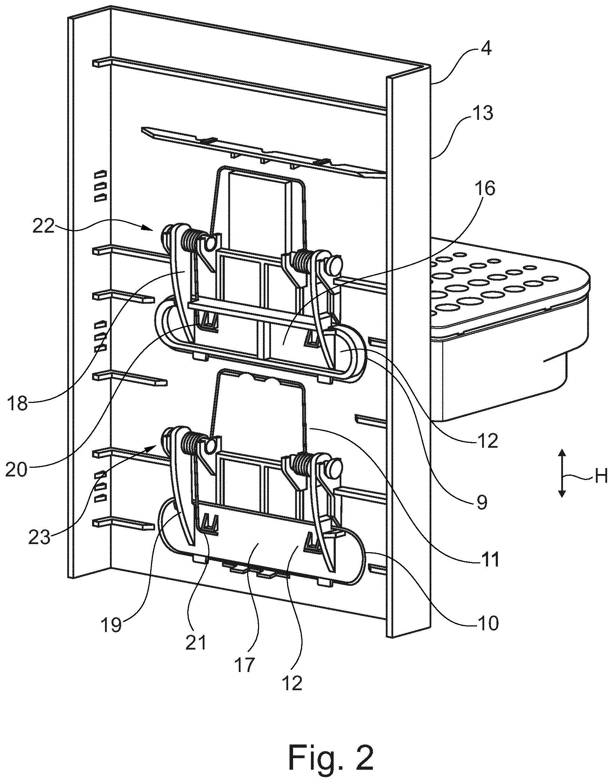

Die Abstelleinrichtung 6 kann in unterschiedlichen, hier beispielhaft genau zwei Positionen relativ zu dem Auslauf 5 positioniert werden, in denen die Abstelleinrichtung 6 in der Hochrichtung H unterschiedlich weit von dem Auslauf 5 beabstandet ist. Konkret befindet sich die Abstelleinrichtung 6 hier beispielhaft in einer oberen Position, die von einer in Fig. 2 gezeigten und in Fig. 1 von der Abstelleinrichtung 6 verdeckten ersten Einstecköffnung 9 in der Gehäusefrontseite 4 definiert ist und alternativ in einer zweiten bzw. unteren Position, die von einer zweiten Einstecköffnung 10 in der Gehäusefrontseite definiert ist. Zum Wechseln der Höhenposition bzw. zum Verändern des Abstandes der Abstelleinrichtung 6, genauer ein in das Gehäuse hineinragender und bevorzugt die Gehäusefrontseite durchsetzender Einsteckabschnitt der Abstelleinrichtung 6 relativ zu dem Auslass 5 muss die Abstelleinrichtung 6 lediglich in einer Entnahmerichtung E, d.h. im Wesentlichen senkrecht zur Flächenerstreckung der Gehäusefrontseite 4 von dem Gehäuse 2 weg aus der ersten Einstecköffnung 9 herausgezogen und in die zweite Einstecköffnung 10 eingeführt werden. Die Einstecköffnungen 9, 10 sind dabei senkrecht zur Hocherstreckung H des Gehäuses 2 langgestreckt bzw. schlitzartig ausgebildet. Aus Fig. 1 und Fig. 2 ist zu erkennen, dass die beiden Einstecköffnungen 9, 10 über einen Gehäusebereich 11 in der Hochrichtung H voneinander beabstandet sind.

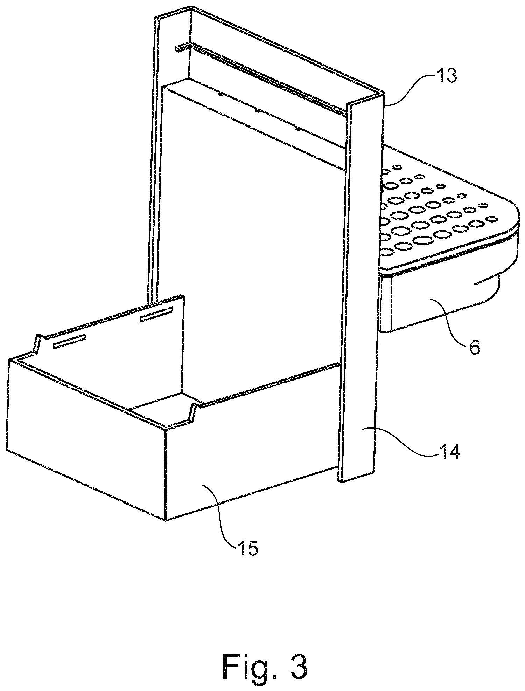

Aus Fig. 1 ist zu erkennen, dass die zweite, hier beispielhaft untere Einstecköffnung 10, die nicht mit der Abstelleinrichtung 6 belegt ist mithilfe von der Abstelleinrichtung 6 separaten Verschlussmitteln 12 der Getränkezubereitungsvorrichtung 1 verschlossen ist, wobei die Verschlussmittel 12 flächenbündig in einem frontseitigen Gehäuseflächenabschnitt 13 angeordnet sind. Der Gehäuseflächenabschnitt 13 wird in dem konkreten Ausführungsbeispiel, wie sich insbesondere aus Fig. 3 ergibt, gebildet von einer Gehäuseschublade 14, die frontseitig in das Gehäuse 2 eingeführt ist und die rückseitig einen Auffangbehälter 15, in dem konkreten Ausführungsbeispiel für Kaffeekapseln trägt bzw. aufweist, die nach erfolgtem Getränkeherstellungsprozess in den Auffangbehälter 15 hineinfallen können.

Aus der Rückansicht gemäß Fig. 2 ist zu erkennen, dass die Verschlussmittel 12 ein der ersten Einstecköffnung 9 zugeordnetes erstes Verschlusselement 16 umfassen sowie ein davon separates, der zweiten Einstecköffnung 10 zugeordnetes zweites Verschlusselement 17. In dem konkreten Ausführungsbeispiel sind beide Verschlusselemente 16, 17 Bestandteil einer Klappe, genauer einer ersten bzw. zweiten Klappe 18, 19, die verschwenkbar an dem Gehäuse 2, hier vorliegend rückseitig an der Gehäusefrontseite 4 angelenkt sind.

In der Darstellung gemäß Fig. 2 befinden sich beide Verschlusselemente 16, 17 in einer Verschlussposition, was jedoch nur für das untere bzw. zweite Verschlusselement 17 zeichnerisch richtig ist, da nur die zweite Einstecköffnung 10 von dem zweiten Verschlusselement 17 verschlossen ist. Das erste Verschlusselement 16 müsste sich bei korrekter Darstellung in einer gegenüber der dargestellten Verschlussposition nach innen verschwenkten Öffnungsposition befindet, da die Abstelleinrichtung 6 senkrecht zur Hochrichtung H in die erste Einstecköffnung 9 hineinragt und in dieser lösbar fixiert, insbesondere durch Verkippen verklemmt ist.

Zu erkennen ist, dass beide Verschlusselemente 16, 17 entgegen der Federkraft von Kraftspeichermitteln 20, 21 aus der Verschlussposition in die Öffnungsposition verstellbar, hier verschwenkbar sind, wobei die Kraftspeichermittel 20, 21 in dem konkreten Ausführungsbeispiel als jeweils zwei Torsionsfederabschnitte umfassende Federspange ausgebildet sind, die sich einenends an der Innenseite der Gehäusefronseite 4 (Gehäusefrontwand) sowie rückseitig an dem jeweiligen Verschlusselement 16, 17 abstützten und das jeweilige Verschlusselement in die gezeigte Verschlussposition federkraftbeaufschlagt.

In dem konkreten Ausführungsbeispiel können die Verschlusselemente 16, 17 durch Einschieben der Abstelleinrichtung 6 in die zugehörige Einstecköffnung 9, 10 und einer daraus resultierenden Verstellkraftbeaufschlagung mittels der Abstelleinrichtung 6 selbst in die Öffnungsposition verstellt, hier verschwenkt werden, die sich in dem konkreten Ausführungsbeispiel jeweils oberhalb der zugehörigen Einstecköffnung 9, 10 befindet. Alternativ kann die Verschwenkrichtung beider Verschlusselemente 16, 17 auch nach unten orientiert sein oder eines der Verschlusselemente 16, 17 kann nach oben und ein anderes nach unten verschwenkbar angeordnet sein. In dem konkreten Ausführungsbeispiel liegen die zugehörigen Gelenkverbindungen 22, 23 jeweils beispielhaft oberhalb der zugehörigen Einstecköffnung 9, 10.

Um nun die Abstelleinrichtung 6 aus der dargestellten Relativposition zu dem Auslass 5 mit geringerem Abstand in die untere Position mit größerem Abstand zu verstellen, muss die Abstelleinrichtung 6 zunächst aus der ersten Einstecköffnung 9 herausgezogen werden. Währenddessen verschwenkt dann das erste Verschlusselement 16 aus der nicht gezeigten Öffnungsposition hier beispielhaft nach unten in die bereits dargestellte Verschlussposition, woraufhin die Abstelleinrichtung 6 in die zweite Einstecköffnung 10 eingeführt wird und dabei das zweite Verschlusselement 17 verstellkraftbeaufschlagt und in dem konkreten Ausführungsbeispiel nach oben in die zugehörige Öffnungsposition verschwenkt.

### Bezugszeichenliste

- 1: Getränkezubereitungsvorrichtung
- 2: Gehäuse
- 3: Aufstellfläche
- 4: Gehäusefrontseite (Gehäusefrontwand)
- 5: Auslass
- 6: Abstelleinrichtung
- 7: Tropfschale
- 8: Aufstellgitter (Abtropfgitter)
- 9: 1. Einstecköffnung
- 10: 2. Einstecköffnung
- 11: Gehäusebereich
- 12: Verschlussmittel
- 13: Gehäuseflächenabschnitt
- 14: Gehäuseschublade
- 15: Auffangbehälter
- 16: 1. Verschlusselement
- 17: 2. Verschlusselement
- 18: 1. Klappe
- 19: 2. Klappe
- 20: 1. Kraftspeichermittel
- 21: 2. Kraftspeichermittel
- 22: 1. Gelenkverbindung
- 23: 2. Gelenkverbindung

- E: Entnahmerichtung
- H: Hochrichtung

## Patentansprüche

1. Getränkezubereitungsvorrichtung (1), insbesondere Kaffeemaschine, mit einem Gehäuse (2) und mit einem Auslass (5) zum Auslassen eines Getränkes in ein Trinkbehältnis sowie mit einer, auf einer Gehäusefrontseite (4) in unterschiedlich zu dem Auslass (5) beabstandeten, bevorzugt umfangsgeschlossenen, Einstecköffnungen (9, 10) abstandsvariabel relativ zu dem Auslass (5) lösbar anordnenbaren Abstelleinrichtung (6) zum Abstellen des Trinkbehältnisses,
**dadurch gekennzeichnet,**
**dass** den Einstecköffnungen (9, 10) Verschlussmittel (12) zum Verschließen der Einstecköffnungen (9, 10) bei nicht eingesteckter Abstelleinrichtung (6) zugeordnet sind.

2. Getränkezubereitungsvorrichtung nach Anspruch 1,
**dadurch gekennzeichnet,**
**dass** die Verschlussmittel (12) den Einstecköffnungen (9, 10) zugeordnete Verschlusselemente (16, 17) umfassen, die zwischen einer jeweiligen, bevorzugt in dem Gehäuse (2) angeordneten, Öffnungsposition und einer jeweiligen Verschlussposition verstellbar sind, in der sie die jeweilige Einstecköffnung (9, 10), bevorzugt flächenbündig mit der Gehäusefrontseite (4), verschließen.

3. Getränkezubereitungsvorrichtung nach einem der Ansprüche 1 oder 2,
**dadurch gekennzeichnet,**
**dass** die Verschlussmittel (12) den Verschlusselementen (16, 17) zugeordnete Antriebsmittel, bevorzugt Kraftspeichermittel (20, 21), zum selbsttätigen Verstellen der Verschlusselemente (16, 17) in Richtung der jeweiligen Verschlussposition bei und/oder nach einem Herausziehen der Abstelleinrichtung (6) aus zugehörigen der Einstecköffnung (9, 10) umfassen.

4. Getränkezubereitungsvorrichtung nach Anspruch 3,
**dadurch gekennzeichnet,**
**dass** die Antriebsmittel eine Verschlusskraft auf die Verschlusselemente (16, 17) in der Verschlussposition ausübend ausgebildet sind.

5. Getränkezubereitungsvorrichtung nach einem der Ansprüche 2 bis 4,
**dadurch gekennzeichnet,**
**dass** die Verschlussmittel(12) den Verschlusselementen (16, 17) zugeordnete Sicherungsmittel, insbesondere Permanentmagnetmittel und/oder Rastmittel zur definierten Positionierung und/oder zum Halten der Verschlusselemente (16, 17) in der jeweiligen Verschlussposition umfassen.

6. Getränkezubereitungsvorrichtung nach einem der Ansprüche 2 bis 5,
**dadurch gekennzeichnet,**
**dass** die Verschlusselemente (16, 17) zwischen der jeweiligen Öffnungsposition und der jeweiligen Verschlussposition translatorisch verstellbar oder verschwenkbar oder in einer kombinierten translatorischen und rotatorischen Bewegung verstellbar angeordnet sind.

7. Getränkezubereitungsvorrichtung nach einem der Ansprüche 2 bis 6,
**dadurch gekennzeichnet,**
**dass** die Verschlusselemente (16, 17) Bestanteil einer jeweiligen Klappe (18, 19) sind.

8. Getränkezubereitungsvorrichtung nach einem der vorhergehenden Ansprüche,
**dadurch gekennzeichnet,**
**dass** die, bevorzugt einen identischen Öffnungsquerschnitt aufweisenden, Einstecköffnungen (9, 10) in einer sich senkrecht zu einer Aufstellfläche (3) erstreckenden, bevorzugt vertikalen, Hochrichtung (H) übereinander, bevorzugt mit Hochabstand zueinander, in der Gehäusefrontseite (4) angeordnet sind.

9. Getränkezubereitungsvorrichtung nach einem der vorhergehenden Ansprüche,
**dadurch gekennzeichnet,**
**dass** der Abstelleinrichtung (6) Hintergriffmittel zum Sichern der Abstelleinrichtung (6) in der Einstecköffnung (9, 10) gegen eine rein geradlinige Entnahmebewegung zugeordnet sind.

10. Getränkezubereitungsvorrichtung nach einem der vorhergehenden Ansprüche,
**dadurch gekennzeichnet,**
**dass** die Abstelleinrichtung (6) als Tropfschale mit Aufstellfläche (3), insbesondere Tropfgitter, ausgebildet ist.

11. Getränkezubereitungsvorrichtung nach einem der vorhergehenden Ansprüche,
**dadurch gekennzeichnet,**
**dass** ein zumindest einen Teil der Einstecköffnungen (9, 10) aufweisender Gehäuseabschnitt Bestandteil einer Gehäuseschublade (14) mit Trester- oder Prortionseinheitenauffangbehälter, insbesondere Kapselauffangbehälter, ist.

12. Verfahren zum Betreiben einer Getränkezubereitungsvorrichtung (1) nach einem der vorhergehenden Ansprüche,
**dadurch gekennzeichnet,**
**dass** die Abstelleinrichtung (6) aus einer der Einstecköffnungen (9, 10) entnommen und diese Einstecköffnung (9, 10), bevorzugt selbsttätig, mittels der Verschlussmittel (12) verschlossen und die Abstelleinrichtung (6) während oder nach dem Verschließen der Einstecköffnung (9, 10) in einer der Einstecköffnungen (9, 10), bevorzugt einer anderen der Einstecköffnungen (9, 10), lösbar angeordnet wird.

## Claims

1. A beverage preparation device (1), in particular a coffee machine, having a housing (2) and having an outlet (5) for pouring a beverage into a drinking container as well as having a rest device (6) for setting down the drinking container, said rest device (6) being detachably arranged on a housing front side (4) in insertion openings (9, 10), which are distanced unequally to the outlet (5) and are preferably circumferentially closed, and being arranged with varying distances relative to the outlet (5)
**characterized in that**
the insertion openings (9, 10) are allocated to closing means (12) for closing the insertion openings (9, 10) when the rest device (6) is not inserted.

2. The beverage preparation device according to claim 1,
**characterized in that**
the closing means (12) comprise closing elements (16, 17), which are allocated to the insertion openings (9, 10) and are displaceable between a respective opening position preferably arranged in the housing (2) and a respective closing position, in which the closing elements (16, 17) close the respective insertion opening (9, 10), preferably flush with the housing front side (4).

3. The beverage preparation device according to claim 1 or 2,
**characterized in that**
the closing means (12) comprise driving means, preferably energy storage means (20, 21), allocated to the closing elements (16, 17) in order to automatically move the closing elements (16, 17) towards the respective closing position when extracting and/or after having extracted the rest device (6) from the respective insertion opening (9, 10).

4. The beverage preparation device according to claim 3,
**characterized in that**
the driving means are designed so as to exert a closing force on the closing elements (16, 17) when in the closing position.

5. The beverage preparation device according to any one of the claims 2 to 4,
**characterized in that**
the closing means (12) comprise fastening means, in particular permanent magnet elements and/or locking elements, allocated to the closing elements (16, 17) in order to accurately position and/or hold the closing elements (16, 17) in the respective closing position.

6. The beverage preparation device according to any one of the claims 2 to 5,
**characterized in that**
the closing elements (16, 17) are arranged so as to be translationally movable or pivotal between the respective opening position and the respective closing position or so as to be movable in a combined translational and rotatable movement.

7. The beverage preparation device according to any one of the claims 2 to 6,
**characterized in that**
the closing elements (16, 17) are part of a respective flap (18, 19).

8. The beverage preparation device according to any one of the preceding claims,
**characterized in that**
the insertion openings (9, 10), preferably comprising an identical opening cross section, are arranged one above the other, preferably having a vertical distance to each other, in the housing front side (4) in a, preferably vertical, vertical direction (H) extending perpendicular to an installation surface (3).

9. The beverage preparation device according to any one of the preceding claims,
**characterized in that**
a device for rearward engagement is allocated to the rest device (6) in order to fasten the rest device (6) in the insertion opening (9, 10) against a purely straight removal movement.

10. The beverage preparation device according to any one of the preceding claims,
**characterized in that**
the rest device (6) is realized as a drip tray having an installation surface (3), in particular a drip grid.

11. The beverage preparation device according to any one of the preceding claims,
**characterized in that**
a housing section comprising at least a part of the insertion openings (9, 10) is part of a housing drawer (14) having a collecting bin for pomace or a serving size, in particular a collecting bin for capsules.

12. A method for operating a beverage preparation device (1) according to any one of the preceding claims,
**characterized in that**
the rest device (6) is removed from one of the insertion openings (9, 10), and that this insertion opening (9, 10) is, preferably automatically, closed by means of the closing means (12), and that the rest device (6) is detachably arranged in one of the insertion openings (9, 10), preferably in the other insertion opening (9, 10), while or after closing the insertion opening (9, 10).

## Revendications

1. Dispositif de préparation de boissons (1), en particulier un percolateur, ayant un boîtier (2) et ayant une sortie (5) pour débiter un boissons dans un réservoir de boissons ainsi qu'ayant un élément de repos (6) pour déposer le réservoir de boissons, ledit élément de repos (6) étant disposé de manière détachable sur une face de boîtier (4) dans des évidements d'insertion (9, 10), qui sont espacés irrégulièrement à la sortie (5) et sont préférablement fermés de manière circonférentielle, et étant disposé ayant des distances variables par rapport à la sortie (5)
**caractérisé en ce que**
les évidements d'insertion (9, 10) sont attribués à des moyens de fermeture (12) pour fermer les évidements d'insertion (9, 10) quand l'élément de repos (6) n'est pas inséré.

2. Dispositif de préparation de boissons selon la revendication 1,
**caractérisé en ce que**
les moyens de fermeture (12) comprennent des éléments de fermeture (16, 17), qui sont attribués aux évidements d'insertion (9, 10) et peuvent être déplacés entre une position d'ouverture correspondante et préférablement disposée dans le boîtier (2) et une position de fermeture correspondante, dans laquelle lesdits éléments de fermeture (16, 17) ferment l'évidement d'insertion (9, 10) correspondant, préférablement forment une surface plane.

3. Dispositif de préparation de boissons selon la revendication 1 ou 2,
**caractérisé en ce que**
les moyens de fermeture (12) comprennent des moyens d'entraînement, préférablement des moyens d'accumulateur d'énergie (20, 21), attribués aux éléments de fermeture (16, 17) afin de bouger automatiquement les éléments de fermeture (16, 17) vers la position de fermeture correspondante quand l'élément de repos (6) est tiré hors de l'évidement d'insertion (9, 10) correspondant et/ou avant l'élément de repos (6) a été tiré hors de l'évidement d'insertion (9, 10) correspondant.

4. Dispositif de préparation de boissons selon la revendication 3,
**caractérisé en ce que**
les moyens d'entraînement sont réalisés afin d'exercer une force de fermeture sur les éléments de fermeture (16, 17) dans la position de fermeture.

5. Dispositif de préparation de boissons selon l'une quelconque des revendications 2 à 4,
**caractérisé en ce que**
les moyens de fermeture (12) comprennent des moyens de fixation attribués aux éléments de fermeture (16, 17), en particulier des éléments d'aimant permanent et/ou des moyens de verrouillage, afin de positionner précisément et/ou de tenir les éléments de fermeture (16, 17) dans la position de fermeture correspondante.

6. Dispositif de préparation de boissons selon l'une quelconque des revendications 2 à 5,
**caractérisé en ce que**
les éléments de fermeture (16, 17) sont disposés de manière à être bougés ou pivotés de manière translationnelle entre la position d'ouverture correspondante et la position de fermeture correspondante ou de manière à être bougés en un mouvement de translation et de rotation combiné.

7. Dispositif de préparation de boissons selon l'une quelconque des revendications 2 à 6,
**caractérisé en ce que**
les éléments de fermeture (16, 17) sont une partie constituante d'un clapet (18, 19) correspondant.

8. Dispositif de préparation de boissons selon l'une quelconque des revendications précédentes,
**caractérisé en ce que**
les évidements d'insertion (9, 10), préférablement comprenant une section transversale d'ouverture identique, sont disposés les uns sur les autres, préférablement ayant une distance verticale les uns aux autres, dans la face de boîtier (4) dans une direction verticale (H), préférablement verticale, s'étendant perpendiculairement à une surface d'appui (3).

9. Dispositif de préparation de boissons selon l'une quelconque des revendications précédentes,
**caractérisé en ce qu'**
un élément à engager de derrière est attribué à l'élément de repos (6) pour fixer l'élément de repos (6) dans l'évidement d'insertion (9, 10) contre un mouvement de prélèvement parfaitement droit.

10. Dispositif de préparation de boissons selon l'une quelconque des revendications précédentes,
**caractérisé en ce que**
l'élément de repos (6) est réalisé en tant que bac égouttoir ayant une surface d'appui (3), en particulier un grille égouttoir.

11. Dispositif de préparation de boissons selon l'une quelconque des revendications précédentes,
**caractérisé en ce qu'**
une section de boîtier comprenant au moins un part des évidements d'insertion (9, 10) est une partie constituante d'un tiroir de boîtier (14) ayant un bac collecteur pour le marc ou des tailles de portion, en particulier un bac collecteur pour des capsules.

12. Procédé pour l'opération d'un dispositif de préparation de boissons (1) selon l'une quelconque des revendications précédentes,
**caractérisé en ce que**
l'élément de repos (6) est prélevé de l'un des évidements d'insertion (9, 10), et **en ce que** cet évidement d'insertion (9, 10) est fermé, préférablement automatiquement, au moyen des moyens de fermeture (12), et **en ce que** l'élément de repos (6) est disposé de manière détachable dans l'un des évidements d'insertion (9, 10), préférablement dans l'autre évidement d'insertion (9, 10), pendant l'évidement d'insertion (9, 10) est fermé ou avant l'évidement d'insertion (9, 10) a été fermé.
